# NOUVEAU FASCICULE DE BREVET EUROPEEN

(11) **EP 0 727 348 B2**
(45) Date de publication et mention de la décision concernant l'opposition: **08.09.2010**
(45) Mention de la délivrance du brevet: 22.10.2003
(21) Numéro de dépôt: 95450012.0
(22) Date de dépôt: 03.08.1995
(51) Int. Cl.: B62M 25/04, B62K 23/04

(54) **Procédé d'ètablissement préalable de développements pour un changement de vitesse de vélo et dispositif apte à faire la sélection de développements qui en découlent**
Verfahren zur Festlegung der Übersetzungsverhältnisse sowie entsprechende Vorrichtung zum Schalten einer Fahrradkettenschaltung
Method of determining the transmission ratios for a bicycle chain shifter and shift device for implementing the ratios thus determined

(30) Priorité: 15.02.1995 FR 9501816
(43) Date de publication de la demande: 21.08.1996
(73) Titulaire: SHIMANO INC., Osaka 590-8577 (JP)
(72) Inventeur: Savard, Franck, F-22400 Planguenoual (FR)
(74) Mandataire: Wallinger, Michael

(56) Documents cités:
- EP-A- 0 647 558
- EP-B1- 0 053 776
- EP-B1- 0 102 259
- WO-A-91/15393
- WO-A1-95/03208
- DE-A1- 689 783
- DE-A1- 2 650 011
- DE-U1- 9 007 698
- FR-A1- 1 499 803
- GB-A- 274 181
- US-A- 4 201 095
- US-A- 5 261 858
- US-A1- 4 055 093
- US-A1- 4 279 174

## Description

La présente invention a pour objet un procédé d'établissement de développements et un dispositif de sélection de développements pour des véhicules comprenant un premier arbre menant équipé d'au moins deux plateaux et un second arbre mené équipé d'au moins deux pignons notamment des vélos.

On va décrire une application du dispositif de variation de développements pour un vélo car cela permet des explications simples, mais il est d'ores et déjà indiqué que ce dispositif de sélection de développements présente un intérêt tout à fait particulier pour le vélo ainsi que cela est décrit ci-après mais qu'il peut être adapté à de nombreuses transmissions.

Dans le cas des vélos, le pédalier est équipé sur son arbre dit menant de plateaux ayant des diamètres extérieurs différents et donc des nombres de dents différents dans des rapports donnés en fonction des applications. Pour simplifier, on choisit un pédalier équipé de deux plateaux A et B, le plateau B ayant un nombre de dents supérieur à celui du plateau A, donc un diamètre supérieur. Le plateau A est intérieur, c'est-à-dire du côté du cadre et le plateau B est extérieur, c'est à dire le plus éloigné du cadre.

Pour chaque tour de pédalier, on peut ainsi augmenter le développement en passant du plateau A au plateau B.

On constate aussi que l'effort à fournir augmente car la différence de bras de levier, entre la distance de la pédale où s'exerce la force à la périphérie du plateau portant les dents, diminue.

La roue arrière motrice est solidaire, généralement avec interposition d'une roue libre, d'un arbre dit mené équipé de pignons sensiblement alignés avec les plateaux, ayant des diamètres différents et donc des nombres de dents différents, dans des rapports donnés en fonction des applications et surtout calculés en fonction des plateaux afin d'obtenir les résultats souhaités au niveau de l'entraînement de la roue.

En effet, plus le diamètre, et donc plus le nombre de dents diminue et plus le nombre de tours de roues est grand pour un même plateau. La distance parcourue par le vélo augmente quand le diamètre et le nombre de dents diminuent, ce qui est l'effet inverse des plateaux.

Par contre, l'effort à fournir est plus important avec un petit pignon car le bras de levier considéré de la périphérie du pignon à l'axe de rotation de la roue diminue.

Le plus grand développement, correspondant au plus grand plateau et au plus petit pignon, demande le plus grand effort, et le plus petit développement, correspondant au plus petit plateau et au plus grand pignon, demande l'effort le plus faible de la part de l'utilisateur.

On considère pour la suite des explications en préambule, que le second arbre dit mené est aussi équipé de deux pignons seulement 1 et 2, le pignon 1 ayant un diamètre et un nombre de dents supérieurs à ceux du pignon 2.

De façon connue, on dispose une chaîne unique entre les plateaux et les pignons, des moyens dérailleurs avant permettant le déplacement de la chaîne de l'un à l'autre des plateaux et des moyens dérailleurs arrière permettant le déplacement de la chaîne de l'un à l'autre des pignons.

Avantageusement et conventionnellement, le plateau 1 de plus petit diamètre est intérieur et le pignon 1 de plus grand diamètre est également intérieur. Ceci a pour effet d'avoir une chaîne quasiment parallèle à la direction de traction pour le plus petit développement A/1 requérant le plus faible effort et pour le plus grand développement B/2 requérant le plus gros effort ainsi qu'expliqué ci-avant.

Les deux développements intermédiaires A/2 et B/1 sont choisis tels que A/2 est inférieur à B/1.

Il faut également rappeler que, pour ces deux développements intermédiaires, il y a de plus une perte due au fait que la traction de la chaîne est désaxée.

La plupart des systèmes de l'art antérieur proposent des moyens dérailleurs avant, manoeuvrés par une commande de plateaux, et des moyens dérailleurs arrière, manoeuvrés par une commande de pignons, ces deux commandes étant indépendantes l'une de l'autre.

Les moyens dérailleurs connus ont la même conception (parallélogramme déformable), à savoir pour l'avant un guide-chaîne formant une chape, mobile suivant un axe sensiblement parallèle à l'axe du pédalier, qui pousse la chaîne sur son brin tendu, provoquant un déraillement contrôlé, et pour l'arrière au moins une roulette mobile latéralement, qui pousse la chaîne sur son brin détendu.

Les commandes sont de différents types et de nombreux perfectionnements ont été apportés, notamment pour faciliter la manoeuvre de sélection.

Le dernier en date, dénommé "Grip Shift" dans le commerce, permet à l'aide d'une poignée rotative gauche et une poignée rotative droite de commander conventionnellement et individuellement les moyens dérailleurs des plateaux et des pignons, respectivement.

L'avantage pour l'utilisateur est de changer de "vitesse" par manoeuvre des poignées et donc de la chaîne entre les différents plateaux et pignons sans trop lâcher le guidon, ce qui est un avantage précieux.

Néanmoins, ainsi que tous les utilisateurs ont pu le constater, la gymnastique d'esprit nécessaire pour "piloter" un vélo équipé de plusieurs plateaux et pignons est loin d'être évidente.

Il faut, d'une part, assimiler l'inversion des effets entre les plateaux et les pignons. Plus le diamètre du plateau augmente et plus la vitesse augmente pour une cadence identique de pédalage et, inversement, plus le diamètre du pignon augmente et plus la vitesse diminue, toujours pour une cadence identique de pédalage.

De plus, les commandes par leviers traditionnels ou par poignée tournante comme la commande "Grip Shift" sont des rotations et il faut encore faire la relation entre les sens de rotation des mouvements de ces commandes et les effets obtenus.

Il faut ensuite penser que les pertes dues au désalignement de la chaîne deviennent vite sensibles, sans compter tous les désagréments subséquents que cela entraîne, notamment les bruits, les vibrations, les déraillements intempestifs.

Ces effets sont, bien sûr, encore plus sensibles pour l'utilisateur qui pratique épisodiquement. Néanmoins, on constate que les "compétiteurs" sont également très perturbés. Les vélos utilisés sont très sophistiqués et peuvent comprendre, par exemple en Vélo Tout-Terrain, jusqu'à trois plateaux et huit pignons, soit 24 combinaisons. Le "compétiteur" est alors soumis pendant une épreuve à une gymnastique intellectuelle inutile visant à sélectionner le bon couple plateau/pignon et le meilleur alignement de chaîne au lieu de se préoccuper du seul parcours, des adversaires et de gérer sa course. De plus, la chaîne sera particulièrement longue et les moyens dérailleurs arrière, tendeur de chaîne, ont une chape particulièrement longue et vulnérable afin de pouvoir satisfaire aux variations importantes de longueur de chaîne libre.

Des problèmes de choix se posent surtout quand il convient de revenir rapidement à des solutions de couples pignon/plateau très différents, notamment lorsque le "compétiteur" arrive au pied d'un raidillon à la suite d'une portion roulante du parcours ou inversement après passage d'un sommet, lorsque le parcours présente une pente raide en descente.

Régulièrement, ces choix ne sont pas tout à fait adaptés et un mauvais changement demande une correction avec au moins un déraillement supplémentaire qui est une perte de temps, d'énergie, de concentration et ceci arrive même aux plus aguerris.

Quand on sait qu'en course automobile, un maximum de six vitesses est prévu et que de nombreuses aides à la conduite viennent faciliter les différents mouvements pour permettre au pilote de se concentrer sur les trajectoires, les vitesses d'approche, les freinages, on comprend l'intérêt qu'il peut y avoir à simplifier l'approche communément appelée "changement de vitesses" qui est en fait un changement de plateaux et de pignons pour les vélos.

Une autre population spécifique est celle des enfants qui devraient aussi pouvoir bénéficier d'un agencement plus simple afin de pouvoir utiliser les bienfaits des moyens dérailleurs. Ceci pourrait avoir un effet de dopage des ventes et de l'utilisation du vélo chez les plus jeunes notamment.

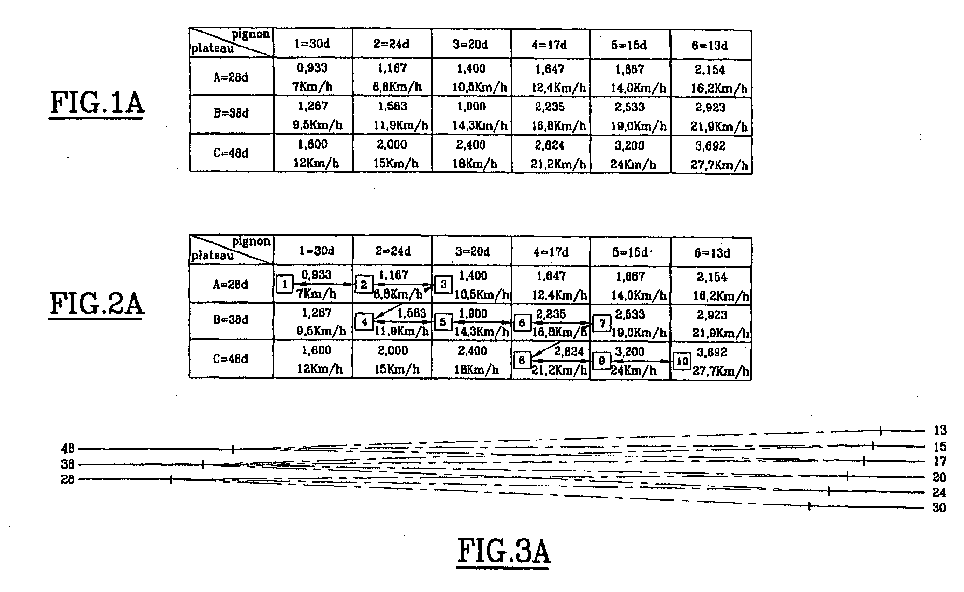

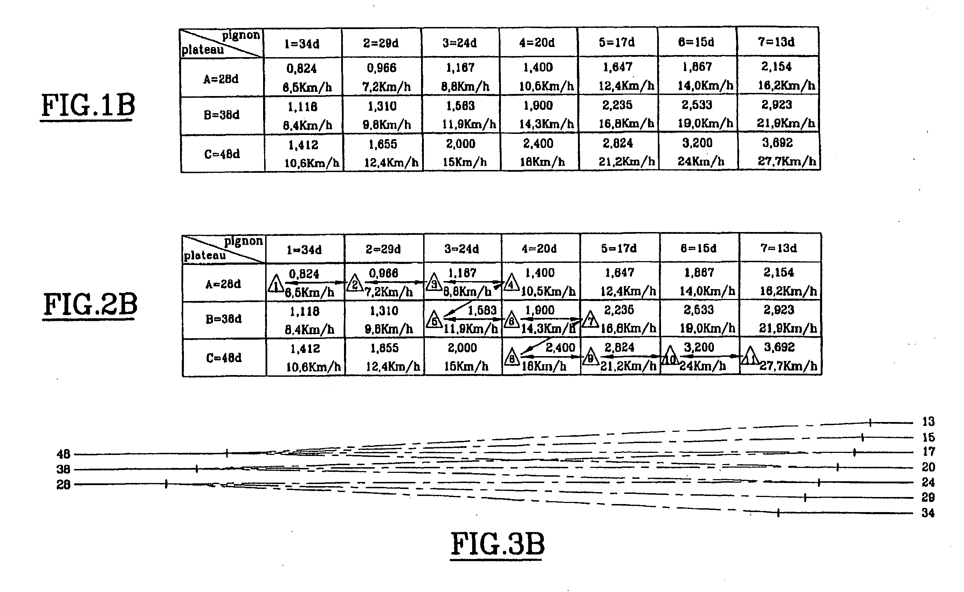

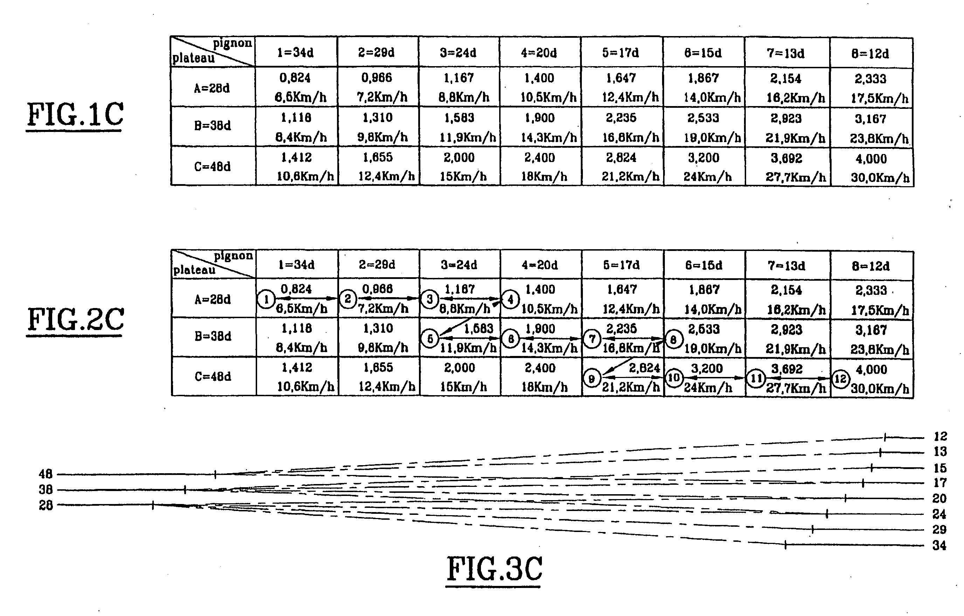

Il faut assurément faire une analyse à la base des différents choix dans les systèmes à combinaisons multiples et sur les figures 1A, 1B, 1C, on a représenté trois tableaux dans lesquels sont indiqués les développements et les vitesses de déplacement obtenus pour une roue de 0,665 m de diamètre, à raison de 1 tour de pédalier par seconde.

Un rapport de 1,000 donne une vitesse de 7,5 km/h.

Le tableau 1A correspond à un agencement de 3 plateaux et 6 pignons.

Le tableau 1B correspond à un agencement de 3 plateaux et 7 pignons.

Le tableau 1C correspond à un agencement de 3 plateaux et 8 pignons.

On remarque tout d'abord que des combinaisons donnent des développements et donc des vitesses identiques ou quasi-identiques par exemple :
Tableau 1A : A4/B2 ou A5/B3 ou A4/C1
Tableau 1B : A5/C2 ou A6/B4 ou A7/B5
Tableau 1C : A4/C1 ou B7/C5 ou B8/C6

Ceci montre bien qu'il y a des développements identiques ou presque pour un même matériel donc redondants.

L'intérêt pour l'utilisateur, de l'enfant au compétiteur, est de recourir aux seuls développements pertinents, en rejetant les développements trop similaires et ceux qui sont inutiles, voire parasites, tout en conservant le meilleur alignement de chaîne.

De façon encore plus judicieuse, il faut pouvoir, notamment pour un compétiteur, autoriser un choix multiple dans les petits développements, lorsque le parcours présente de nombreux accidents de terrain à forte déclivité, ou un choix multiple dans les grands développements si le parcours est roulant, ou encore avec une première série de choix dans les grands développements et une seconde série de choix dans les petits développements, sans intermédiaire, en cas de longues montées et longues descentes.

Aussi, parmi la vingtaine de combinaisons potentielles plateau/pignon, il faut retenir une dizaine de combinaisons avec des développements ayant une progressivité choisie pour couvrir l'ensemble des besoins de l'utilisateur, seuls ces développements respectant un bon alignement de chaîne.

L'invention propose donc un procédé de sélection de développements progressifs parmi un ensemble de développements donnés par un ensemble plateau/pignon ainsi qu'un dispositif de sélection de développements associés.

En ce qui concerne le dispositif, on connaît une demande de brevet représentant l'art antérieur le plus proche WO 91/15393 avec un dispositif qui a pour but de commander, simultanément, les moyens dérailleurs avant des plateaux et les moyens dérailleurs arrière des pignons, pour conserver le meilleur alignement possible de la chaîne entre les plateaux et les pignons.

Aussi, le dispositif prévoit de changer de plateau dès que la chaîne descend ou monte sur les pignons pour conserver un bon alignement.

Dans ce but, il est prévu une table fixée sur le cadre du vélo avec un premier axe de rotation immobile en translation et portant une butée sous forme d'un galet, libre en rotation. Un boîtier est monté coulissant sur la table.

Il est ensuite prévu, solidaires du boîtier :
- une came en appui sur le galet et entraînée en rotation par un ensemble de pignons en démultiplication, les mouvements étant commandés par des câbles de traction indépendants travaillant l'un dans un sens et l'autre dans le sens opposé,
- un cylindre d'enroulement/déroulement des deux câbles de commande des moyens dérailleurs avant et des moyens dérailleurs arrière.

La came a un profil tel que son rayon augmente tous les 90° d'une valeur constante. Des trous à la surface de la came reçoivent des billes pressées par des ressorts pour assurer un point dur à chaque rotation de 90°.

Le fonctionnement est ainsi fait que lors des rotations de la came, le boîtier s'éloigne ou se rapproche par glissement sur la table fixe, ce qui assure la traction ou le rapprochement des câbles, simultanément à l'enroulement plus ou moins important de ces câbles, si bien que par additions et soustractions combinées de ces déplacements, on peut piloter le déplacement des moyens dérailleurs avant et arrière suivant une combinaison préétablie, totalement figée.

On remarque en effet que la came doit faire un tour complet à chaque fois. Pour recommencer un nouveau cycle, par exemple dans le cas où la came a une division en quatre secteurs de 90°, il est possible de réaliser des combinaisons de :
- 1 à 4 pignons avec le premier plateau,
- obligatoirement 4 pignons avec le deuxième plateau,
- 1 à 4 pignons avec le troisième plateau.

En effet, il faut nécessairement faire effectuer une rotation de 360° à la came pour le plateau intermédiaire, ce qui limite le choix des combinaisons plateau/pignon.

Il n'y a donc pas une possibilité de choix de développements mais seulement une possibilité de maintien en permanence d'un bon alignement de la chaîne.

On constate aussi qu'un boîtier déplaçable sur une table fixé sur le cadre n'est pas adapté au domaine du vélo, encore moins au secteur du vélo Tout-Terrain, car on imagine aisément la boue, l'eau, les feuilles, et/ou la poussière venant entraver le bon fonctionnement d'un tel boîtier.

Il faut, de plus, deux câbles de commande du boîtier en plus des câbles de commande des moyens dérailleurs car il faut toujours exercer une traction pour manoeuvrer le boîtier dans un sens comme dans l'autre car un élément de rappel de taille raisonnable serait insuffisant et, dans tous les cas, rendrait la commande encore plus dure à manier par l'utilisateur.

La dureté du dispositif tel que décrit se manifeste, de toute façon, au moment de la transition du plus petit diamètre de la came directement au plus grand diamètre. En effet, dans le premier sens de rotation, l'allongement du diamètre se fait progressivement par augmentation d'une valeur constante mais dans le sens inverse, il y a un point très dur de passage. de 3 valeurs

On note également la fragilité des pignons, des axes et les frottements nombreux. A ce sujet, il est noté que le dispositif ne peut fonctionner qu'avec des organes d'ajustement, non décrits, mais qui rendraient le dispositif encore plus délicat tant pour la résistance mécanique que pour les réglages et l'entretien.

La fiabilité est nécessairement réduite par le nombre important de pièces mobiles mises en oeuvre, ce qui grève aussi le coût de réalisation industrielle d'un tel dispositif.

Une variante de réalisation de ce dispositif propose de commander le boîtier mobile par une vis sans fin entraînant une came filetée intérieurement pour coopérer avec ladite vis et munie à sa surface extérieure de gorges de guidage des têtes de câbles de commande des moyens dérailleurs avant et arrière.

Cette variante permet de s'affranchir des câbles intermédiaires de commande avec un inconvénient important : il faut que l'utilisateur tourne la poignée de plus d'un tour jusqu'à trois tours, ce qui n'est pas envisageable dans la pratique.

Le problème d'effectuer au moins un tour complet au milieu du cycle subsiste, ce qui limite les choix de combinaisons.

Le dispositif interdit également tout shunt d'un ensemble de combinaisons pour revenir plus rapidement à une combinaison plateau/pignon donnée. L'utilisateur doit nécessairement passer par toutes les combinaisons des "vitesses" à la montée comme à la descente.

Dans tous les cas, il est impossible de modifier très rapidement les combinaisons préétablies, ce qui est d'ailleurs inutile dans ce dispositif de l'art antérieur puisque le seul but est d'éliminer les combinaisons au cours de l'utilisation desquelles la chaîne n'est pas alignée, or pour un choix de plateaux et pignons préétabli, les bons alignements et les tolérances sont parfaitement connus. Cette demande WO-A-91/15393 implique également un procédé d'établissement de développements.

On connaît aussi la demande WO 95/03208 qui décrit des moyens dérailleurs avant, modifiés.

En effet, le déraillage est toujours effectué par des moyens de rappel élastique dans le sens du plus grand pignon ou plateau vers le plus petit et par une manoeuvre manuelle exécutée par l'utilisateur dans le sens inverse car l'effort requis est plus important.

Par ailleurs, on sait que les plateaux vont croissants en diamètre de l'intérieur vers l'extérieur et inversement pour les pignons en sorte que le plus petit développement et le plus grand développement aient le meilleur alignement de chaîne possible.

Dans cette demande WO 95/03208, les moyens de rappel élastique visent à déplacer la chape de commande du plus petit plateau vers le plus grand. Dans ce cas, les deux ressorts des moyens dérailleurs avant et arrière travaillent dans la même direction, de l'intérieur vers l'extérieur.

On remarque que le ressort de rappel doit être très puissant car il lui faut, notamment, sur le plateau de plus grand diamètre, amener la chaîne au-dessus des dents pour qu'elle se positionne ensuite sur les dents. Aussi, en plus des efforts pour presser la chaîne en translation latérale, c'est-à-dire sur le brin tendu, il faut l'amener à un diamètre supérieur au diamètre du plus grand plateau.

Ceci conduit à une manoeuvre très difficile au niveau de l'organe de commande qui requiert un grand effort de la part de l'utilisateur.

Ce grand effort est constant tout au long de la chaîne cinématique et tous les autres organes doivent être dimensionnés en conséquence, came, ergot de guidage et levier notamment.

On remarque également que l'ergot solidaire du levier, qui vient en appui sur la came, est pressé par le câble et par l'effort de rappel des moyens de rappel des moyens dérailleurs, mais il n'y a aucune possibilité de tirer sur le câble et de pousser ainsi que cela va être proposé par la présente invention.

En outre, si les couples plateau/pignon sont pris en compte, on constate que l'alignement de chaîne, lui, n'est pas un paramètre respecté. On trouve ainsi, tableau Il de la figure 8 de ce document WO 95/03208, une combinaison du plateau B avec le plus petit pignon, ce qui n'est pas souhaitable.

Le but du dispositif selon la présente invention, y compris les variantes, est de permettre la mise en oeuvre du procédé, c'est à dire une sélection de développements, avec des moyens simples et fiables, qui assurent des passages aisés d'une combinaison à une autre, qui autorisent les variations brusques dans le sens de la diminution des développements avec des variations très progressives dans le sens de l'augmentation des développements, par exemple, tout ceci en optimisant les alignements de chaîne. Le présent dispositif autorise même la modification très rapide du choix des combinaisons en fonction du parcours par exemple.

Un autre but est de proposer un organe de manoeuvre qui soit souple pour l'utilisateur sachant que les enfants, notamment, peuvent difficilement exercer des efforts importants tout en maintenant leur équilibre sans faire un écart. Il est également utile de prévoir une rotation limitée angulairement pour couvrir la plage des développements retenus.

Le dispositif doit rester simple avec un nombre très réduit de pièces, ce qui, outre le gage de fiabilité annoncé, conduit à des prix de revient intéressants pour l'industrie.

On s'apercevra, notamment après la description détaillée qui va suivre, que le dispositif peut être intégré en première monte mais qu'il trouve sa place sur tous les vélos équipés de moyens dérailleurs avant et arrière, ce qui permet de l'installer à posteriori sur les vélos existants.

Selon la revendication 5 l'invention a pour objet un dispositif de sélection de développements apte à servir en tant que transmission variable à chaîne telle que découle du procédé selon l'invention, notamment pour un vélo, comprenant un train de n plateaux menants, un train de m pignons menés, reliés par une chaîne, des moyens dérailleurs associés aux plateaux et des moyens dérailleurs associés aux pignons, un premier câble de commande des moyens dérailleurs associés aux plateaux et un second câble de commande des moyens dérailleurs associés aux pignons, lesdits moyens dérailleurs évoluant entre deux positions extrêmes et comprenant des moyens de rappel élastique de l'une des positions extrêmes vers l'autre, le dispositif comprenant également une commande unique comportant une poignée rotative et une partie fixe en vue d'une liaison, notamment avec un vélo, et lié aux moyens de dérailleurs afin de permettre la sélection d'un développement approprié à partir de l'ensemble réduit,
caractérisé en ce que
la poignée (18) est liée avec un barillet (16) afin d'être, et solidarisée en translation avec celui-ci et agencée pour être déplacé en rotation suite à tout maniement de la poignée, le barillet (16) comprenant deux pistes (30, 32), dont chacune reçoit un ergot parmi deux fixés respectivement aux extrémités des premier (44) et second (46) câbles de commande, lesdites pistes (30, 32) ayant des profils pour assurer un positionnement avec une tolérance plus ou moins suffisante pour exagérer le mouvement et revenir précis des câbles correspondant aux couples plateau/pignon des développements successifs choisis, ainsi que des moyens d'indexation pour chacun de ces développements, les deux pistes (30, 32) s'étendant sur le pourtour du barillet (16) de façon qu'au moins une de ces deux pistes effectue plus d'un tour complet autour dudit pourtour sans être jointive et telles que les points d'indexation correspondants aux développements successifs se suivent en progression continue le long de chaque piste (30, 32) et permettant, au moins pour l'un des développements choisis, un déplacement simultané des ergots des premier et second câbles (44, 46) de commande.

Selon un mode de réalisation de l'invention, le barillet est cylindrique en cloche et les pistes sont en creux, disposées à l'intérieur et à l'extérieur de ladite cloche, et chaque ergot est un galet roulant dans la piste correspondante, solidaire d'un curseur guidé en translation, fixé à l'extrémité du câble de commande correspondant.

Plus particulièrement, le barillet comprend un disque avec des bossages, et les ergots sont des galets, situés sur des doigts, prévus pour rouler sur lesdits bossages, les doigts permettant la conversion du mouvement rotatif en un mouvement sensiblement linéaire.

Le dispositif selon l'invention comprend des moyens de compensation des efforts des moyens de rappel élastique des moyens dérailleurs associés aux plateaux et aux pignons.

Ces moyens de compensation comprennent, pour chaque câble de commande, un ressort, coaxial audit câble de commande et pré-comprimé, interposé entre une butée fixe de la poignée de commande et l'ergot correspondant.

Les ressorts sont du type hélicoïdal de grande longueur, de petit diamètre et de faible raideur, en sorte de fournir un effort de compensation suffisant pour un encombrement minimal.

Le dispositif selon l'invention comprend des moyens à cliquet à double sens, interposés entre la poignée de commande rotative et le barillet, chaque cliquet comprenant un ergot articulé par rapport à un prolongement en cloche de la poignée de commande, rappelé en saillie par un ressort, ledit ergot étant prévu pour coopérer avec des crans ménagés dans le barillet.

Selon le dispositif de la présente invention, la partie fixe de la poignée de commande, formant cocotte comprend des moyens pour autoriser le retrait d'un premier barillet et la mise en place d'un second barillet portant des pistes différentes.

Selon une variante, chaque piste est segmentée, avec des moyens de réglage de la mise en saillie de chaque segment, en sorte de réaliser une piste avec un profil donné, ajustable.

Quant à la revendication 1 le procédé d'établissement préalable est défini de façon qu'au moyen d'une commande unique, il permette, pendant que la transmission variable à chaîne est en mode de travail, de sélectionner à partir de cet ensemble de développements un développement approprie, la transmission comprenant un train de n plateaux menants et un train de m pignons menés, reliés par une chaîne, conduisant à une totalité de n x m développements potentiels, selon lequel procédé, on retient parmi cette totalité de ces n x m développements potentiels un ensemble réduit de développements croissants ou décroissants choisis parmi l'ensemble des développements utiles duquel tous les développements sensiblement de même valeur que l'un des développements retenus et/ou tous les développements conduisant à un désalignement exagéré de la chaîne ont déjà été supprimés, et puis on établit selon cet ensemble réduit des développements choisis un programme mécanique apte à être incorporé dans la commande unique pour assurer que toute sélection de développement se fait parmi les développements choisis,
caractérisé en ce qu'
on choisit librement chacun des développements retenus préalablement parmi l'ensemble des développements utiles, sans qu'aucune contrainte dans ce choix soit imposée par les moyens d'exécution de la commande unique du fait du choix même des autres développements concurremment retenus,
tandis que le nombre de développements que la commande unique puisse sélectionner selon un programme mécanique quelconque n'est nullement limité par la façon selon laquelle la commande a été soit conçue soit réalisée, sauf par la capacité des moyens qui portent le programme mécanique, cette capacité ayant été choisie librement et sans qu'aucune contrainte soit imposée pour raison de la mode de réalisation de la commande unique.

Préférentiellement, on choisit des développements régulièrement étagés entre le plus petit développement et le plus grand développement ou des développements groupés en fonction des déclivités, de l'utilisateur, du terrain.

Encore plus préférentiellement, dans un tableau à double entrées comprenant les pignons en ligne et les plateaux en colonnes, ou inversement, on choisit une succession de couples par passage d'un développement au suivant ou au précédant par passage d'une case du tableau à la case adjacente en ligne, adjacente en colonne ou encore adjacente en diagonale.

Les procédé et dispositif selon l'invention sont maintenant détaillés dans la description qui sa suivre, ainsi que les variantes associées, ces modes de réalisation n'ayant aucun caractère limitatif. La description est faite en regard des dessins qui vont suivre sur lesquels :
- Les figures 1A, 1B et 1C sont les tableaux des développements et des vitesses de déplacement obtenus pour 18, 21 et 24 combinaisons,
- Les figures 2A, 2B et 2C représentent les choix retenus,

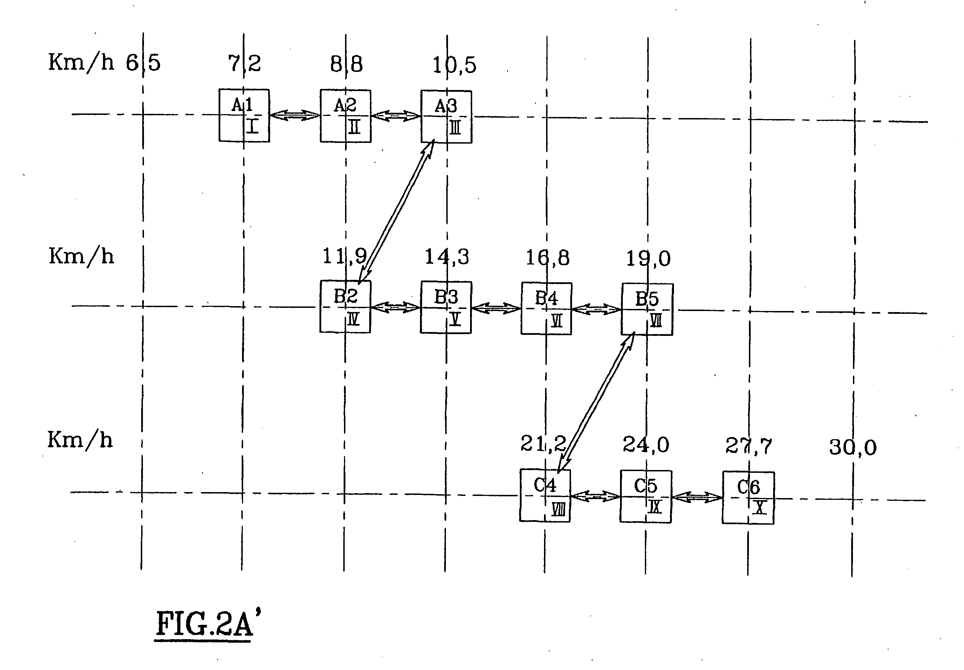

- Les figures 2A', 2B' et 2C' représentent des choix comparatifs,

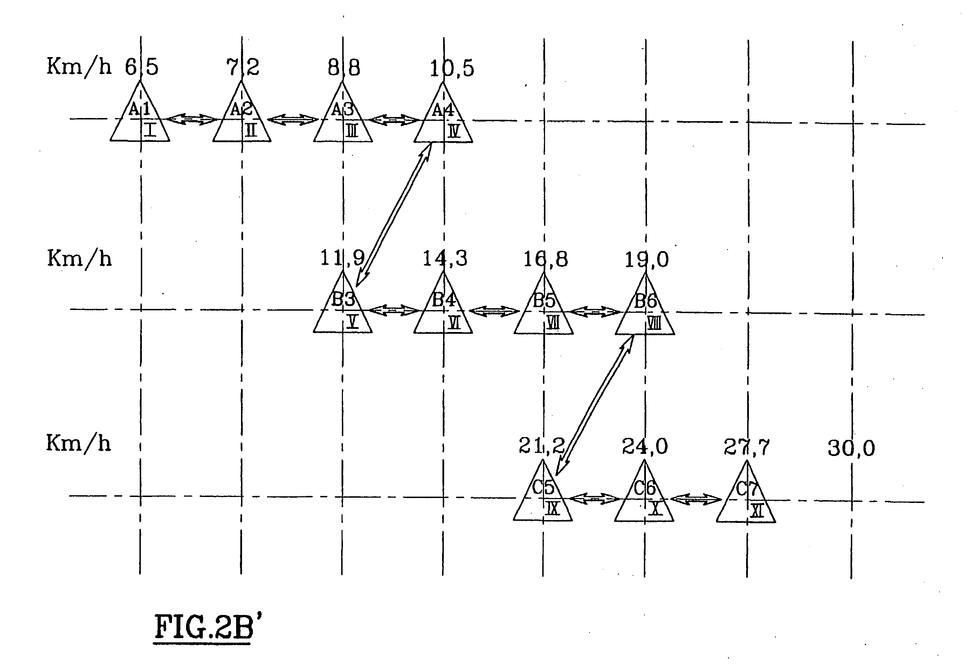

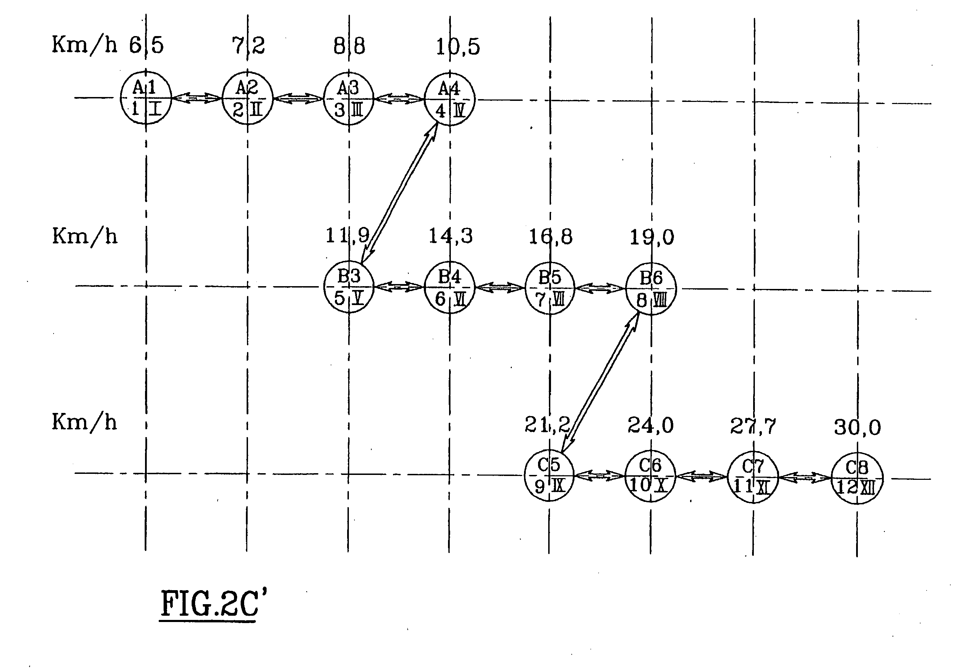

- Les figures 3A, 3B et 3C représentent les positions de la chaîne, dans le cas des figures 2A, 2B et 2C,

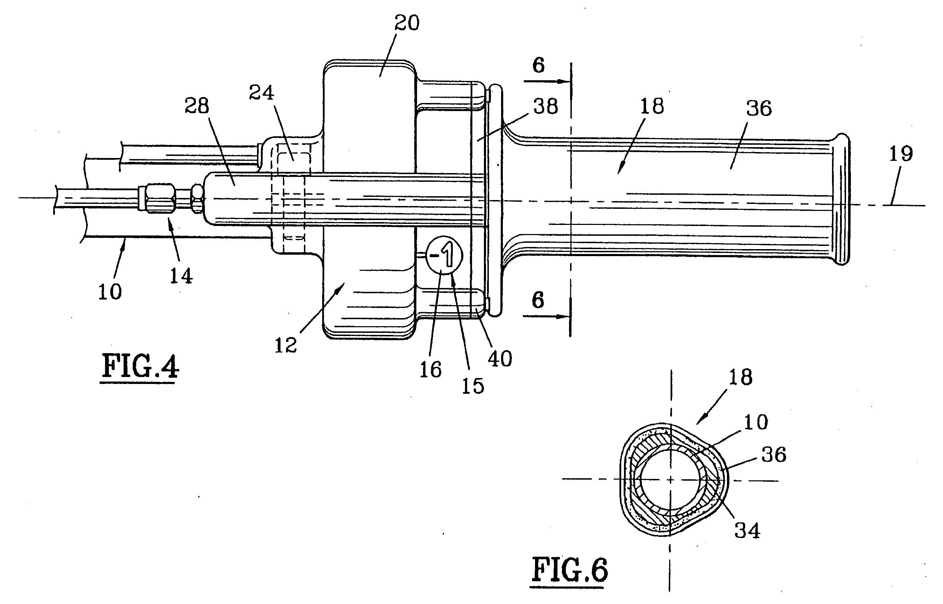

- La figure 4 représente une vue de dessus d'une poignée selon l'invention avec le dispositif intégré dans une poignée de vélo,

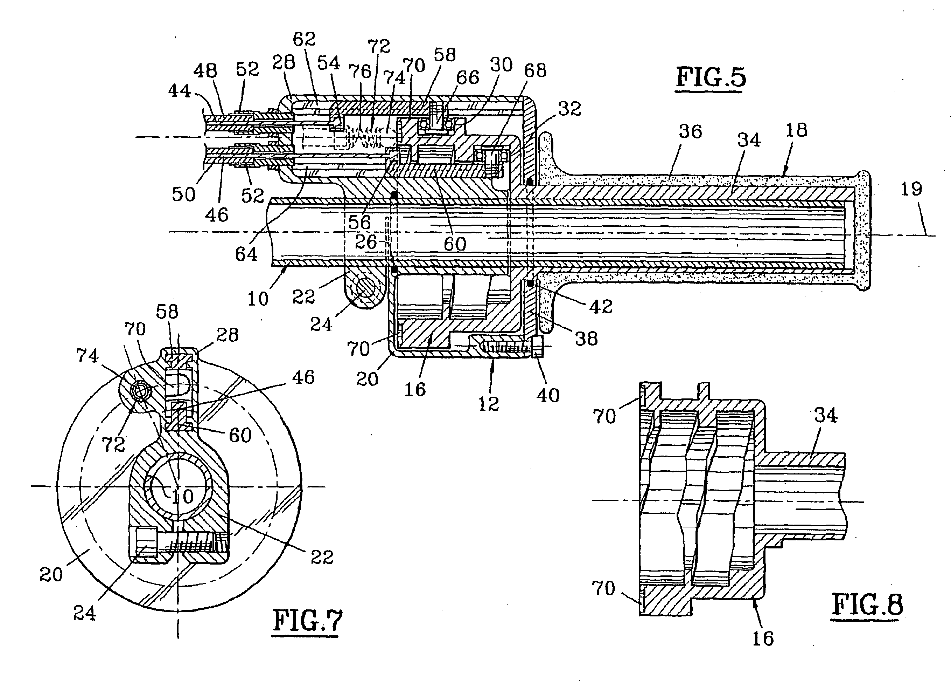

- La figure 5 représente une vue en coupe longitudinale de la poignée de la figure 4,
- La figure 6 représente une vue en coupe suivant la ligne 6-6 de la figure 4,
- La figure 7 représente une vue en coupe suivant la ligne 7-7 de la figure 5,
- La figure 8 représente une vue du barillet isolé,

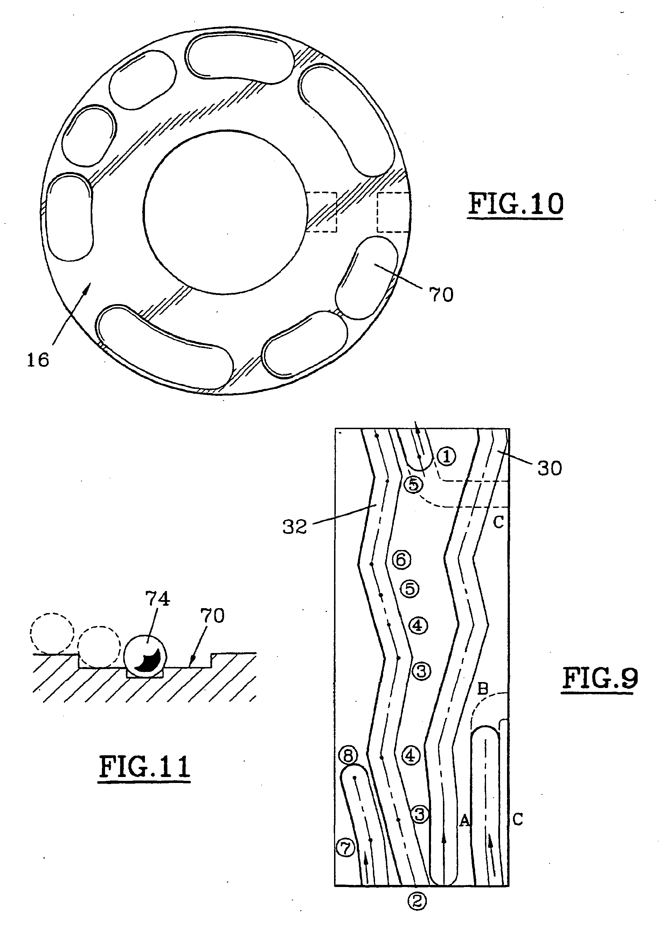

- La figure 9 représente une vue développée des pistes du barillet,
- La figure 10 représente une vue des lumières de sélection,
- La figure 11 représente une vue isolée en coupe d'une lumière,

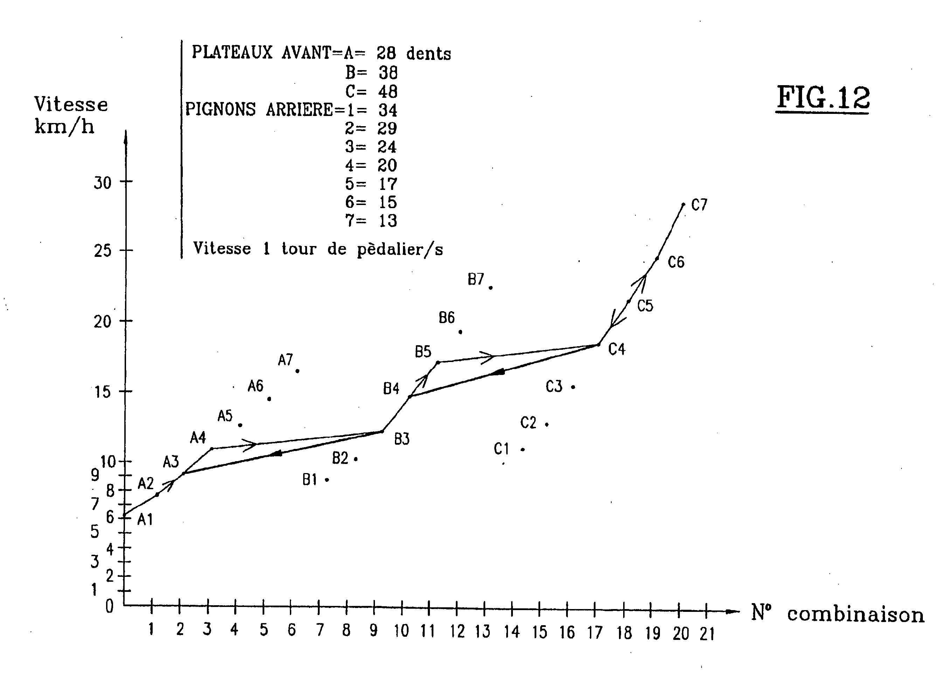

- La figure 12 représente une courbe 4-3-4 avec un shunt au retour à l'aide d'un aiguillage,

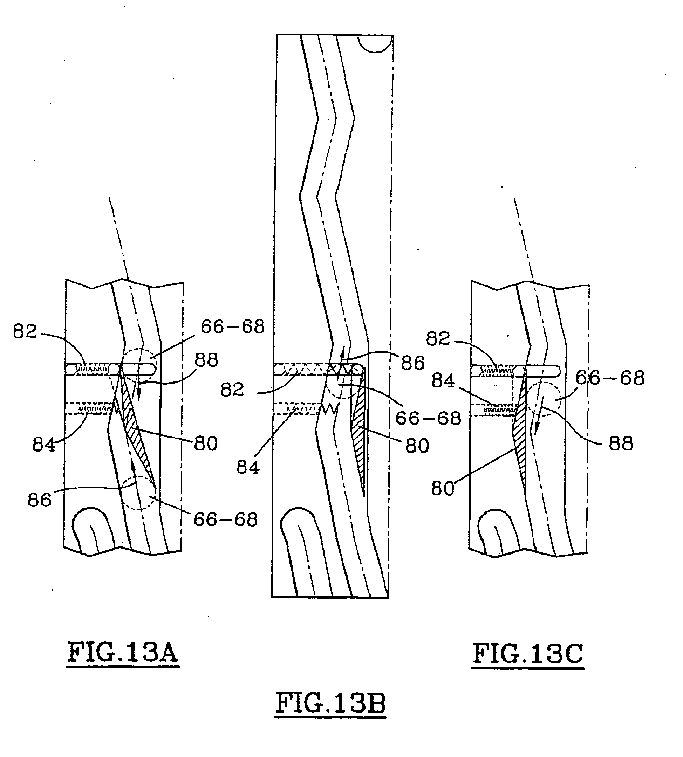

- Les figures 13A, 13B et 13C représentent un tel aiguillage et son fonctionnement,

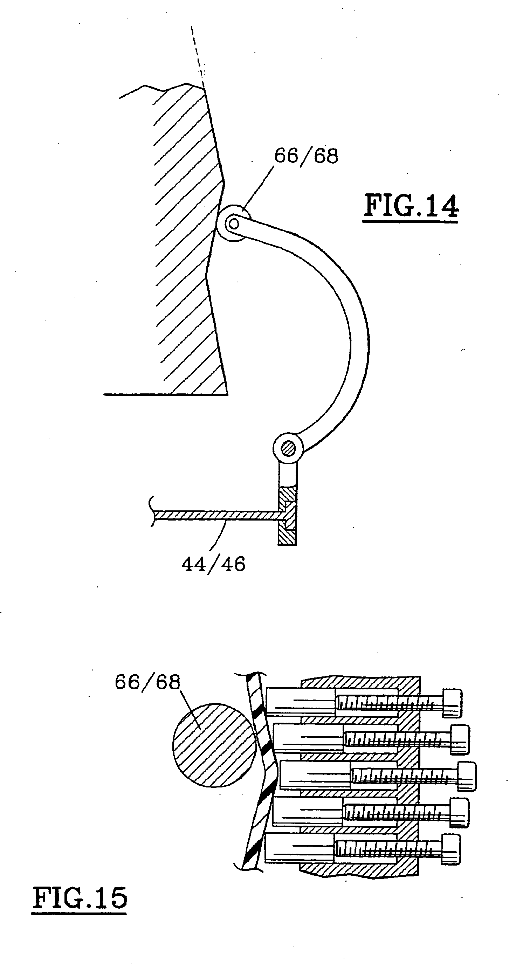

- La figure 14 représente une vue schématique avec un levier inverseur,
- La figure 15 représente une variante avec une came modulaire,

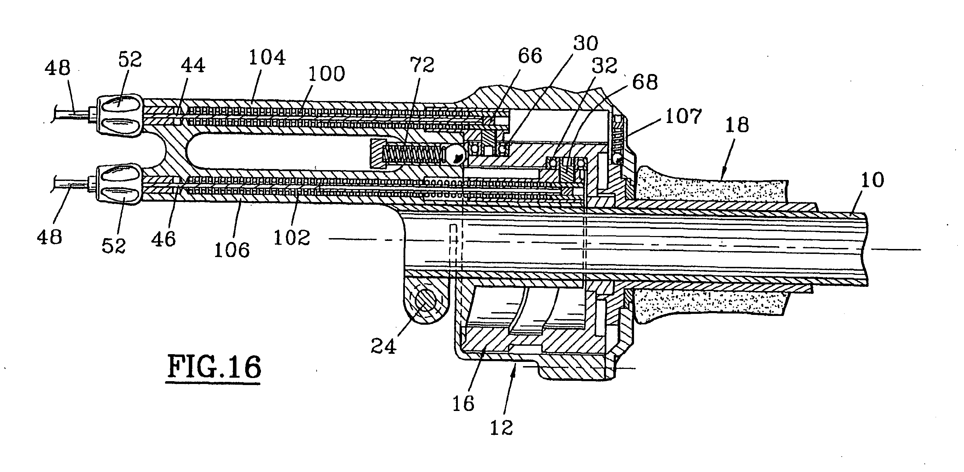

- La figure 16 représente un perfectionnement très important de l'invention qui vient d'être décrite, surtout pour le confort de l'utilisateur,

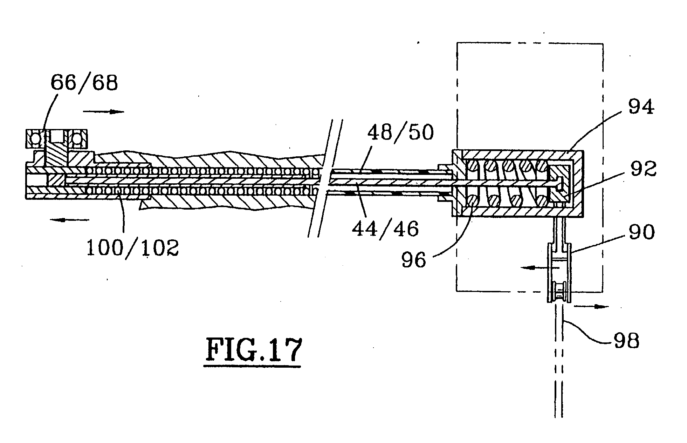

- La figure 17 montre une représentation schématique du fonctionnement de ce perfectionnement, et

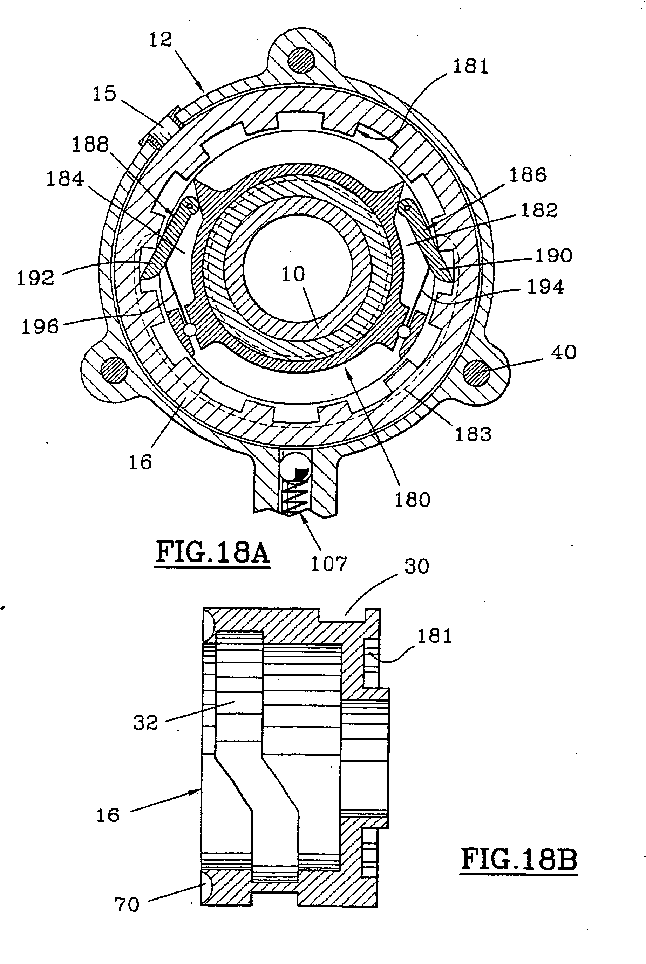

- Les figures 18A et 18B montrent un montage à cliquets pour limiter la course angulaire, la figure 18B montrant plus particulièrement le barillet.

Sur la figure 1A, on a calculé les développements obtenus avec une roue de 0,665 m de diamètre lorsque l'utilisateur pédale au rythme de 1 tour de pédalier par seconde.

Le pignon 1 comprend 30 dents.

Le pignon 2 comprend 24 dents et ainsi de suite.

Les plateaux A, B, C comprennent 28, 38 et 48 dents.

Le plus petit développement A1 correspond à une vitesse de 7 km/h, c'est le meilleur rapport de démultiplication et il est retenu pour la première combinaison de la sélection selon le procédé.

Le deuxième combinaison, sans changement de plateau, est A2 puis la troisième combinaison est A3.

On peut ensuite choisir A4 ou B2 qui ont 0,5 km/h de différence.

Dans le mode de réalisation représenté, on a retenu B2 d'où un changement de plateau et une remontée d'un pignon pour obtenir la quatrième combinaison retenue B2.

Les cinquième, sixième et septième combinaisons retenues sont B3, B4 et B5 afin de ne pas changer de plateau, ce qui, pour des rapports sensiblement équivalents à C2, C3, C4, permet de travailler avec un meilleur alignement de chaîne.

La huitième combinaison, après un changement de plateau et de pignon, est C4, les neuvième et dixième combinaisons étant C5 et C6.

Ces combinaisons sont représentées sur la figure 2A tandis que les différentes positions de la chaîne sont visibles sur la figure 3A.

On aurait aussi pu passer directement de B4 à C4 puis C5 et C6, c'est-à-dire un simple changement de plateau de B à C sans changement de pignon, obtenant 9 combinaisons au lieu de 10, le pas de progression dans les grands développements étant plus important.

Sur un parcours un peu plus accidenté, les montées sont plus raides et il faut de petits développements tandis que les descentes, généralement plus pentues également, requièrent de grands développements pour pouvoir pédaler même en descente et rester en prise. Dans ce cas, on choisit la configuration de la figure 2B, le train de pignons comprenant généralement un pignon supplémentaire de 34 dents.

Sur le tableau 1B, on retrouve les différents développements de combinaisons conduisant à un 4-3-4.

On aurait pu, à partir du même train de plateaux et pignons, réaliser la combinaison A1, A2, A3 ; B2, B3, B4, B5, B6 ; C5, C6, C7, ce qui conduit à un 3-5-3.

Sur un parcours encore plus accidenté, le train de pignons est complété par un petit pignon de 12 dents et on obtient, Figure 2C, un 4-4-4 d'une très grande progressivité avec un alignement judicieux respecté.

On remarque que le procédé selon l'invention ne comprend que des combinaisons de développements croissants ou décroissants suivant le sens dans lequel on le considère.

Il y a donc, dans un sens, une "accélération" et, dans le sens inverse, une "décélération".

On peut parler d'une sélection de développements optimisée en rendement et non plus d'un "changement de vitesses" comme sont couramment dénommés les sauts de plateaux et de pignons.

L'utilisateur est débarrassé de la réflexion sur la combinaison plateau/pignon et sur les redondances couramment obtenues par des combinaisons inutiles et de la surveillance du bon alignement de la chaîne.

Le choix des développements peut être standardisé comme on le constate sur les figures 2A', 2B' et 2C'. Ces figures montrent que l'on peut obtenir, en fonction de l'équipement des vélos des sélections identiques mais en nombre d'autant plus important que le vélo est équipé de pignons.

Ainsi pour la sélection 2B', on a ajouté une combinaison dans les petits développements afin d'utiliser le pignon supplémentaire de 34 dents.

Pour la sélection 2C', on a ajouté une combinaison dans les grands développements, en plus de celle de 2B' dans les petits développements, afin d'utiliser le pignon supplémentaire de 12 dents.

Le procédé selon l'invention consiste à établir un ensemble de combinaisons de développements progressifs grâce à des moyens de variation de développements selon l'ensemble choisi.

On remarque sur la figure 12, qui sera réutilisée par la suite, qu'il est possible de tracer la courbe de chaque sélection, à partir de laquelle on déduit la pente de progressivité des développements ou des vitesses correspondantes, tant à la montée qu'à la descente.

Si le procédé ainsi décrit paraît tout à fait judicieux pour les nombreuses raisons explicitées ci-avant, il faut encore pouvoir le mettre en oeuvre de façon simple et fiable ; c'est l'objet du dispositif qui va maintenant être décrit ainsi que des variantes prévues.

Sur la figure 4, on a représenté un cintre tubulaire 10 formant guidon, sur lequel est montée une cocotte 12 dans laquelle est intégrée une tringlerie 14, un barillet 16 cylindrique prévu pour coopérer avec la tringlerie, et une poignée de manoeuvre 18 solidaire du barillet, ladite poignée faisant saillie à l'extérieur de la cocotte et tournant de façon coaxiale au cintre, autour de l'axe 19.

La cocotte comprend une chambre 20 sensiblement cylindrique, fixée sur le cintre par une double patte fendue 22, ainsi que représentée sur les figures 5 et 7, une vis 24 assurant le serrage.

Un joint 26, de type torique, assure l'étanchéité amont entre le cintre 10 et la chambre 20. La chambre 20 se prolonge vers l'amont, côté tringlerie par une chambre de tringlerie 28.

Dans la chambre 20, le barillet 16 est reçu à rotation. Ce barillet 16, ainsi que représenté sur la figure 8, comprend deux pistes 30 et 32, l'une extérieure et l'autre intérieure, grâce à une forme en cloche dudit barillet 16 cylindrique. Le barillet 16 se prolonge par une poignée de manoeuvre 18, plus particulièrement par un corps 34 à section intérieure ronde, et à section extérieure triangulaire, pour une meilleure préhension, ce corps étant recouvert d'un gainage 36 améliorant le confort, d'une part, et l'esthétique, d'autre part, voir coupe figure 6. Le diamètre intérieur du corps 34 est identique, au jeu de fonctionnement près, au diamètre extérieur du cintre 10.

La chambre 20 est obturée en aval par un couvercle 38, fixé par des vis 40, plus particulièrement trois vis réparties à 120°.

Un joint torique aval 42 assure l'étanchéité entre le trou central du couvercle et le corps de poignée 34.

La tringlerie 14 comprend un premier et un second câbles 44, 46 avec un gainage 48, 50, reliés à des moyens dérailleurs arrière d'un jeu de pignons et à des moyens dérailleurs avant d'un jeu de plateaux. Ces mécanismes ne sont pas représentés et peuvent prendre toute forme connue à ce jour ou à venir, puisque la tringlerie manoeuvre de façon simultanée deux câbles indépendants avec gainage, sans organes de réglage et d'ajustement spécifique, autres que des butées de gainage 52 à contre-écrou de type connu.

Les câbles comprennent des têtes serties 54 et 56 qui sont bloquées dans des curseurs 58 et 60, montés coulissants en translation rectiligne dans des glissières 62 et 64 ménagées à l'intérieur de la chambre de tringlerie 28. Ces curseurs sont équipés chacun d'un galet 66, 68 monté sur roulement, chaque roulement 66, 68 coopérant avec la piste correspondante 30, 32 du barillet.

Le barillet 16 comprend sur sa face avant des lumières borgnes de sélection 70, plus visibles sur la figure 8. Sur la figure 11, on a représenté en coupe les lumières mais avec un prépositionnement exagérant l'action menée pour favoriser un bon déraillement et un positionnement final précis, les deux billes en trait mixte montrant les positions libre et prépositionnée et la bille en trait plein montrant la position définitive.

Il est également monté dans la cocotte, plus particulièrement dans la chambre de tringlerie 28, un verrouillage à bille 72, comprenant une bille 74 et un ressort 76 de pression, en appui sur la bille. Cette bille est prévue pour coopérer avec les lumières 70 du barillet, ainsi que cela est maintenant expliqué dans le passage qui va suivre.

Au préalable, on se reporte à la figure 9 sur laquelle on a représenté un mode de réalisation des deux pistes 30, 32 développées. La première piste 30 correspond aux pignons et la seconde piste 32 aux plateaux, dans le cas retenu.

On a représenté ainsi 12 combinaisons, sur les 24 combinaisons possibles avec 8 pignons et 3 plateaux.

On remarque le décalage angulaire des deux pistes afin de pouvoir les imbriquer l'une avec l'autre, ce qui réduit considérablement l'encombrement du barillet.

Les câbles sont ainsi initialement en bout de course, sur le plateau A, c'est-à-dire le plus petit, et sur le pignon 1, c'est-à-dire le plus grand. Une première rotation du barillet provoque le passage sur le pignon 2, la chaîne restant sur le plateau A, puis par rotation successive sur le pignon 3 et le pignon 4, ce qui correspond à A1, A2, A3, A4.

Ensuite, le plateau utilisé est le B, si bien que la chaîne déraille du plateau A à B car le câble 46 est tracté par le curseur 68 qui se déplace dans la piste 32, tandis que, simultanément, la piste 30 s'infléchit pour tendre le câble 44, ce qui ramène la chaîne sur le pignon 3 pour obtenir la cinquième combinaison, à savoir, B3.

Les rotations suivantes conduisent aux pignons 4, 5 et 6 pour obtenir les combinaisons B4, B5 et B6. Ce sont les sixième, septième et huitième combinaisons.

Une rotation complémentaire de la poignée et du barillet provoque le passage sur le plateau C avec un retour sur le pignon 5 en sorte d'obtenir la neuvième combinaison retenue, C5.

Ensuite, les rotations successives vont permettre les changements de pignons 6, 7 et 8, donnant les dernières combinaisons C6, C7 et C8, c'est-à-dire les dixième, onzième et douzième combinaisons sélectionnées suivant le procédé.

Il est également prévu deux butées visant à supprimer la première et la dernière position selon qu'il y a 10 ou 11 développements sélectionnés sur les 12 possibles pour éviter tout déraillement car l'éloignement vers l'extérieur des pignons extrêmes est plus important, dans le cas de 8 pignons notamment.

Toutes les positions sont indexées au moyen de la bille 74. Cette indexation permet même un déraillement tout à fait franc et performant car le prépositionnement, voir la figure 11, permet d'aller un peu plus loin, ce qui provoque un changement très rapide, suivi d'un léger retour en arrière et par le positionnement précis de la bille dans la cuvette, constitue une indexation idéale pour laquelle la chaîne est au meilleur alignement plateau/pignon pour la combinaison choisie.

Lorsque l'utilisateur souhaite diminuer le développement, il lui suffit de tourner la poignée en sens inverse autant de crans que nécessaire.

On a ainsi confirmation de la simplicité du fonctionnement et de l'utilisation, comme une poignée d'accélérateur de motocyclette.

On remarque aussi que, suivant les développements retenus, on peut modifier quasi-instantanément la sélection par changement de barillet.

A cette fin, les trois vis 40 sont retirées pour permettre d'ôter le couvercle 38. Le barillet 16, avec sa poignée 34, est ensuite retiré à son tour par translation sur le cintre. Il faut simplement prendre la précaution de mettre les curseurs 58 et 60 en correspondance avec des embrèvements représentés schématiquement en trait discontinu sur la figure 10, pour le passage des galets, et qui constituent les entrées des pistes.

La mise en place d'un nouveau barillet avec des pistes 30' et 32' correspondant à des combinaisons nouvelles de développements s'effectue par la succession inverse les opérations qui viennent d'être décrites.

Bien sûr, la fixation du couvercle peut être une fixation rapide plus adaptée encore à un tel changement, à la portée de l'homme de l'art, par exemple au moyen de clips ou par un pas de vis quart de tour venu de fabrication avec le couvercle, au lieu de vis indépendantes.

Des essais ont montré qu'une commande unique, telle que décrite, est peu encombrante, d'une grande souplesse de fonctionnement, d'une grande douceur à manoeuvrer, d'une grande précision de maniement, d'une extrême simplicité conduisant systématiquement à un choix judicieux du développement adéquat.

Tout moyen d'aide au choix du développement, notamment une fenêtre 15 telle que représentée sur la cocotte 12 de la figure 4, est appréciable.

Il subsiste encore une caractéristique importante pour rendre le dispositif selon l'invention totalement complet. Cette caractéristique réside dans la possibilité de réaliser une descente, dans les développements, plus rapide que la montée ou inversement.

En effet, arrivant au pied d'un obstacle, franchissement d'un passage boueux, raidillon, sable par exemple, l'utilisateur peut apprécier un retour du développement 12 au développement 5 et ceci de la façon la plus rapide possible.

Aussi, la présente invention propose en complément un aiguillage représenté sur la figure 13A. Cet aiguillage comprend une lame 80 avec une double pente et une base formant triangle ainsi que deux ressorts 82 et 84. Le ressort 82 est interposé entre le barillet et l'une des pointes, travaillant à la traction et le ressort 84 est interposé sur la pente correspondant à cette pointe, travaillant à la compression en sorte de faire pivoter la lame autour de cette pointe.

Le fonctionnement est indiqué en regard des figures complémentaires 13B et 13C.

Le galet à billes 66, ou 68 du curseur se déplaçant en translation relative par roulage dudit galet par rapport au barillet suivant la flèche 86, prend appui sur la première pente de la lame 80 et roulant ensuite sur la seconde pente, il écarte la pointe aval, tendant simultanément le ressort 82. Le galet suit alors le profil donné de la piste qui comprend un élargissement au droit de l'aiguillage.

On est alors dans la position de la figure 13B.

Au retour, suivant la flèche 88, le ressort 82 ayant rappelé la pointe aval de la lame 80, le galet prend appui sur la base de la lame, ce qui shunte l'étape au droit de l'aiguillage, faisant "sauter" la chaîne d'un ou deux pignons, ou d'un plateau.

Le ressort 84 est légèrement comprimé au passage afin de ramener ensuite la lame 80 dans la position de la figure 13A.

On peut aussi indiquer une variante qui consiste à mettre le galet en appui sur un des côtés de la piste à la montée et sur le côté opposé de cette même piste à la descente, les deux côtés n'ayant pas un profil identique.

On remarque aussi que si l'on inverse la manoeuvre de l'un des curseurs, comme dans la variante schématique de la figure 14, avec un levier, on peut encore gagner en encombrement car les pistes 30 et 32 vont en divergeant alors que là, elles pourront aller en convergeant.

Sur la figure 15, on a représenté une variante avec une piste segmentée. En effet, dans ce cas, les galets viennent en appui sur des pistes qui comprennent des segments élémentaires, sous forme de vis, déplaçables en translation pour conformer la piste comprenant une membrane ou une succession de segments coulissants ajustables, au profil voulu. Une telle variante peut être plus particulièrement intéressante pour les "compétiteurs".

Il est aussi prévu un perfectionnement très important pour l'utilisateur. En effet, les moyens dérailleurs, ainsi que cela a été expliqué plus avant dans le texte, comprennent généralement une chape avec un ressort de rappel. Cet ensemble est schématiquement représenté sur la figure 17, la chape est référencée 90, le bras mobile 92, le carter 94, le ressort 96 et les plateaux ou pignons 98. Les autres références liées à ce perfectionnement ont les mêmes numéros que dans la description qui précède.

Dans le cas des moyens dérailleurs connus, l'utilisateur doit exercer, grâce à des leviers de démultiplication, des efforts importants pour comprimer le ressort 96, lorsqu'il souhaite déplacer la chape dans un sens, en sorte que l'énergie de rappel accumulée par le ressort assure le retour de la chape dès que l'utilisateur relâche une certaine longueur de câble par manoeuvre inverse du levier concerné.

Dans le cas présent, en se reportant à la figure 16 qui montre un mode de réalisation très peu différent du précédent du point de vue du barillet, on comprend que les curseurs 58 et 60 solidaire des câbles exerce des efforts importants sur les galets 66 et 68, efforts qui peuvent rendre les mouvements de rotation difficiles à exécuter ou pour le moins qui n'apporte pas la souplesse et la douceur de manoeuvre qui seraient souhaitables pour un utilisateur.

Comme les mouvements du barillet sont indexés, le perfectionnement important pour le confort de l'utilisateur consiste à disposer pour chacun des câbles un ressort de compensation 100, 102 de petit diamètre, de grande longueur avec une pré-compression importante et d'une faible épaisseur, en sorte que les spires sont jointives lorsque le ressort est comprimé au maximum et quasi jointives lorsque le ressort est un peu détendu, compte tenu de la faible course des curseurs.

On note aussi que la force totale de chacun des ressorts doit être sensiblement identique à celle des moyens de rappel des moyens dérailleurs correspondants, pour provoquer un équilibre.

Ainsi que cela est montré sur cette figure 16, chaque ressort est disposé dans un logement 104, 106 dans le prolongement de la cocotte 12 et venu de fabrication avec elle.

On retrouve de façon simplifiée le montage qui fait bien apprécier l'intérêt du ressort de compensation 100, 102 sur la figure 17.

Lorsque l'utilisateur manoeuvre la poignée dans un sens, entraînant le curseur dans un sens, et qu'il exerce un effort pour comprimer le ressort 96 de rappel des moyens dérailleurs correspondants, la pré-compression du ressort de compensation 100 ou 102 correspondant est relâchée, ce qui diminue d'autant l'effort à exercer par l'utilisateur. Une butée à bille 107 permet aussi le réglage de la dureté de la poignée si la manoeuvre s'avérait trop souple tout en assurant un effet d'indexation lorsqu'il est prévu des logements pour recevoir cette bille.

A l'inverse, lorsque l'utilisateur manoeuvre la poignée dans l'autre sens, entraînant de façon relative le curseur dans l'autre sens, et qu'il exerce un effort pour comprimer le ressort de compensation 100 ou 102 correspondant, l'énergie emmagasinée dans le ressort 96 de rappel des moyens dérailleurs correspondants est opposée et cette force vient en déduction de l'effort à fournir par l'utilisateur.

Cet agencement conduit à la réalisation d'un mécanisme d'une très grande douceur, sans poser de problème de guidage et de précision car il faut rappeler que les galets sont guidés dans des rampes, les bords de ces rampes ayant des dimensions précises par rapport aux dimensions des galets, ce qui limite les jeux aux seuls jeux nécessaires.

De plus, les efforts à exercer étant ainsi compensés, cela offre des perspectives intéressantes pour améliorer encore l'agencement du dispositif selon l'invention.

En effet, les pentes des pistes vis à vis des galets peuvent être plus importantes sans que cela ne vienne perturber la manoeuvre de la poignée par l'utilisateur. Il est donc possible de réduire la longueur des pistes et par cela même, de diminuer la course angulaire de la poignée. Les écarts peuvent être tout à fait régulièrement répartis angulairement, ce qui simplifie encore l'agencement selon l'invention.

Sur les figures 18A et 18B, on a également représenté schématiquement un perfectionnement très important avec un montage à cliquets pouvant s'adapter à toutes les variantes indiquées précédemment.

Il convient de laisser libre en rotation le barillet 16 qui n'est plus solidaire de la poignée 18.

Le barillet est muni de crans 181 sur une zone annulaire de sa surface intérieure.

Par contre, la poignée 18 se prolonge à l'intérieur du barillet par une cloche 180, coaxiale au barillet 16, à l'intérieur.

Cette cloche comprend deux logements 182,184 dans chacun desquels est disposé un cliquet 186,188.

Ces cliquets comprennent chacun un ergot 190,192 articulé dans le logement qui le porte et un ressort de rappel 194,196 qui met cet ergot en saillie de façon qu'il puisse coopérer avec les crans ménagés dans le barillet.

Les ergots sont, bien entendu, disposés en sorte que l'un accroche les crans dans un sens de rotation de la poignée tandis que l'autre s'efface et inversement. Ceci est obtenu par une piste 183 qui forme butée, autorisant un déplacement contrôlé angulairement, ce qui permet de limiter le débattement à un cran ou à plusieurs crans dans le sens de la montée ou de la descente des développements.

C'est ainsi que le débattement angulaire du poignet de l'homme est plus grand pour descendre les développements que pour les monter. Aussi peut-on prévoir de ramener la poignée en position neutre, c'est-à-dire telle que représentée figure 18A, tous les crans à la montée et de ramener la poignée en position neutre, tous les un, deux, trois ou quatre crans successifs à la descente.

Ceci permet de faire tourner le barillet dans un sens ou dans l'autre suivant les besoins.

Ainsi les avantages de ce perfectionnement sont nombreux puisque l'utilisateur peut se déplacer d'un ou de plusieurs développements tant à la montée qu'à la descente.

De plus, conjugué avec le perfectionnement précédent de compensation qui diminue la course, on comprend que le confort pour l'utilisateur est optimum.

On remarque encore que les crans, en position neutre, reçoivent les cliquets en leur milieu, la butée à bille 107 les positionnant ainsi. Ceci présente un intérêt car les cliquets n'engagent les crans que lorsque la butée à bille 107 est débloquée, ce qui évite à l'utilisateur de faire deux efforts simultanés. Ces efforts sont successifs, ce qui contribue encore à la douceur de manoeuvre.

Les avantages générés par les procédé et dispositif selon l'invention peuvent ainsi être récapitulés tant ils sont importants et différents de l'art antérieur concernant le vélo notamment, véhicule de déplacement connu depuis si longtemps :
- Suppression du souci de sélection de pignons et plateaux avec uniquement un choix de développement croissant ou décroissant en fonction des besoins et des capacités de l'utilisateur à l'instar d'une poignée de gaz d'un véhicule à moteur type deux roues, tout en conservant un bon alignement de chaîne ;
- Souplesse de manoeuvre d'une poignée unique avec visualisation d'une information unique, avec disposition pour droitier ou gaucher de cette poignée unique ;
- Fiabilité accrue par un nombre très limité de pièces qui peuvent être réalisées en alliage léger ou en matière plastique adaptée ;
- Possibilité de changement quasi-instantané du choix des développements par changement du barillet ;
- Adaptation sur les vélos notamment, en première monte mais aussi sur tout le parc existant, sans modification de ces vélos.
- Déraillement franc et précis grâce à une exagération du mouvement au-delà de la position correspondant au développement retenu et retour en position parfaite correspondant au meilleur alignement de chaîne pour le développement choisi.

## Revendications

1. Procédé visant d'établir un ensemble de développements comme préalable à la réalisation d'une transmission variable à chaîne, notamment une transmission variable a chaîne pour un vélo, ladite transmission étant équipée d'une commande unique permettant, pendant que la transmission variable à chaîne est en mode de travail, de sélectionner à partir de cet ensemble de développements un développement approprie, la transmission comprenant un train de n plateaux menants commandé par un premier câble de commande (44) et un train de m pignons menés commandé par un deuxième câble de commande (46), lesdits plateaux et pignons étant reliés par une chaîne, conduisant à une totalité de n x m développements potentiels, selon lequel procédé, on retient parmi cette totalité de ces n x m développements potentiels un ensemble réduit de développements croissants ou décroissants choisis parmi l'ensemble des développements utiles, duquel tous les développements sensiblement de même valeur que l'un des développements retenus et/ou tous les développements conduisant à un désalignement exagéré de la chaîne ont déjà été supprimés, et puis on établit selon cet ensemble réduit des développements choisis un programme mécanique apte à être incorporé dans la commande unique pour assurer que toute sélection de développement se fait parmi les développements choisis,
**caractérisé en ce que**
ladite étape d'établissement du programme mécanique comprend la fourniture d'un barillet (16) à raccorder à une poignée tournante (18) de ladite commande unique et la réalisation sur ledit barillet (16) de deux pistes (30, 32) pour actionner lesdits premier et deuxième câbles de commande (44, 46) pour sélectionner un développement quelconque parmi lesdits développements choisis,
on choisit librement chacun des développements retenus préalablement parmi l'ensemble des développements utiles, sans qu'aucune contrainte dans ce choix soit imposée par les moyens d'exécution de la commande unique du fait du choix même des autres développements concurremment retenus,
tandis que le nombre de développements que la commande unique puisse sélectionner selon un programme mécanique quelconque n'est nullement limité par la façon selon laquelle la commande a été, soit conçue, soit réalisée, sauf par la capacité des moyens qui portent le programme mécanique, cette capacité ayant été choisie librement et sans qu'aucune contrainte soit imposée pour raison de mode de réalisation de la commande unique.

2. Procédé selon la revendication 1, **caractérisé en ce qu'**on choisit des développements répartis régulièrement entre le plus petit développement et le plus grand développement.

3. Procédé selon la revendication 1, **caractérisé en ce qu'**on choisit des développements groupés en fonction des déclivités, de l'utilisateur, du terrain.

4. Procédé selon l'une quelconque des revendications précédentes, **caractérisé en ce que** dans un tableau à double entrées comprenant les pignons en ligne et les plateaux en colonnes, ou inversement, on choisit une succession de couples par passage d'un développement au suivant ou au précédant, par passage d'une case du tableau à la case adjacente en ligne, adjacente en colonne ou encore adjacente en diagonale.

5. Dispositif de sélection de développements apte à servir en tant que transmission variable à chaîne, telle que découle du procédé selon l'une quelconque des revendications 1 à 4, notamment pour un vélo, ce dispositif comprenant un train de n plateaux menants, un train de m pignons menés, reliés par une chaîne, des moyens dérailleurs associés aux plateaux et des moyens dérailleurs associés aux pignons, un premier câble de commande des moyens dérailleurs associés aux plateaux et un second câble de commande des moyens dérailleurs associés aux pignons, lesdits moyens dérailleurs évoluant entre deux positions extrêmes et comprenant des moyens de rappel élastique de l'une des positions extrêmes vers l'autre, le dispositif comprenant également une commande unique comportant une poignée (18) rotative et une partie fixe (12) en vue d'une liaison, notamment avec un vélo, et lié aux moyens de dérailleurs afin de permettre la sélection d'un développement approprié à partir de l'ensemble réduit,
**caractérisé en ce que**
la poignée (18) est liée avec un barillet (16) afin d'être, et solidarisée en translation avec celui-ci, et agencée pour être déplacé en rotation suite à tout maniement de la poignée, le barillet (16) comprenant deux pistes (30, 32), dont chacune reçoit un ergot parmi deux fixés respectivement aux extrémités des premier (44) et second (46) câbles de commande, lesdites pistes (30, 32) ayant des profils pour assurer un positionnement avec une tolérance plus ou moins suffisante pour exagérer le mouvement et revenir précis des câbles correspondant aux couples plateau/pignon des développements successifs choisis, ainsi que des moyens d'indexation pour chacun de ces développements, les deux pistes (30, 32) s'étendant sur le pourtour du barillet (16) de façon qu'au moins une de ces deux pistes effectue plus d'un tour complet autour dudit pourtour sans être jointive et telles que les points d'indexation correspondants aux développements successifs se suivent en progression continue le long de chaque piste (30, 32) et permettant, au moins pour l'un des développements choisis, un déplacement simultané des ergots des premier et second câbles (44, 46) de commande.

6. Dispositif selon la revendication 5, **caractérisé en ce que** le barillet (16) est cylindrique en cloche et les pistes (30,32) sont en creux, disposées à l'intérieur et à l'extérieur de ladite cloche, et chaque ergot est un galet (66,68) roulant dans la piste correspondante, solidaire d'un curseur guidé en translation, fixé à l'extrémité du câble de commande correspondant.

7. Dispositif selon la revendication 5, **caractérisé en ce que** le barillet (16) comprend un disque avec des bossages, et les ergots sont des galets, situés sur des doigts, prévus pour rouler sur lesdits bossages, les doigts permettant la conversion du mouvement rotatif en un mouvement sensiblement linéaire.

8. Dispositif selon l'une quelconque des revendications 5 à 7, **caractérisé en ce qu'**il comprend des moyens de compensation (101,102) des efforts des moyens de rappel élastique (96) et des moyens dérailleurs associés aux plateaux et aux pignons.

9. Dispositif selon la revendication 8, **caractérisé en ce que** les moyens de compensation comprennent, pour chaque câble de commande, un ressort (100,102), coaxial audit câble de commande et pré-comprimé, interposé entre une butée fixe de la poignée de commande et l'ergot correspondant.

10. Dispositif selon la revendication 9, **caractérisé en ce que** les ressorts sont du type hélicoïdal de grande longueur, de petit diamètre et de faible raideur, en sorte de fournir un effort de compensation suffisant pour un encombrement minimal.

11. Dispositif selon l'une quelconque des revendications 5 à 10, **caractérisé en ce qu'**il comprend des moyens à cliquet à double sens, interposés entre la poignée de commande rotative et le barillet.

12. Dispositif selon la revendication 11, **caractérisé en ce que** chaque cliquet comprend un ergot articulé par rapport à un prolongement en cloche de la poignée de commande, rappelé en saillie par un ressort, ledit ergot étant prévu pour coopérer avec des crans ménagés dans le barillet.

13. Dispositif selon l'une quelconque des revendications 5 à 12, **caractérisé en ce que** ce que la partie fixe (12) de la poignée (18) de commande, comprend des moyens (38) pour autoriser le retrait d'un premier barillet (16) et la mise en place d'un second barillet (16) portant des pistes (30',32') différentes.

14. Dispositif selon l'une quelconque des revendications 5 à 13, **caractérisé en ce que** la piste (30,32) est une piste segmentée avec des moyens de réglage de la mise en saillie de chaque segment en sorte de réaliser une piste avec un profil donné.

## Claims

1. Method of establishing a set of gears as previously in the realization of a variable chain transmission, in particular a variable chain transmission for a bicycle, wherein said transmission is equipped with a single control allowing said transmission, when in operation, to select an appropriate gear from said set of gears, said transmission comprising a train of n driving sprockets controlled by a first control cable (44) and a train of m driven pinions controlled by a second control cable (46) said sprockets and pinions being interconnected by a chain, resulting in a total of n × m possible gears, wherein according to said method, a reduced set of increasing or decreasing is retained from said total of n × m possible gears which are selected from the set of useful gears, the gears of which having essentially the same ratio as one of the retained gears and/or all of the gears leading to an exaggerated misalignment of the chain having already been suppressed, and then, according to said reduced set of selected gears, a mechanical program is established that is adapted to be incorporated into said single control to ensure that any gear selection is made from said selected gears,
**characterized in that**
said step of establishing said mechanical program comprises providing of a barrel (16) for connecting with a rotary handle (18) of said single control and realizing two tracks (30, 32) on said barrel (16) for controlling said first and second control cables (44, 46) for selecting any gear from the selected gears, each of said gears previously retained from said set of useful gears is freely selected without any constraint in this selection being imposed by the execution means of said single control, even by the choice of the other concurrently retained gears,
wherein the number of gears that said single control can select with any mechanical program is in no way limited by the manner in which the control has been carried out, either with respect to its design or to its realization, except for the performance of the means carrying said mechanical program, said performance having been freely chosen and without any constraint having been imposed by the type of realization of the single control.

2. Method according to claim 1, **characterized in that** gears are selected that are evenly distributed between the smallest gear and the largest gear.

3. Method according claim 1, **characterized in that** gears are selected which are grouped depending on the slopes, the user, the terrain.

4. Method according to any one of the preceding claims, **characterized in that** in a double input table comprising the pinions in lines and the sprockets in columns, or vice versa, a succession of pairings is selected for the transition from one gear to the next or the preceding one, by transition from one box of the table to the adjacent line box, adjacent column box or even diagonally adjacent box.

5. Gear selection device suitable for a variable chain transmission as disclosed in the method according to any one of claims 1 to 4, in particular for a bicycle, said device comprising a train of n driving sprockets and a train of m driven pinions interconnected by a chain, a derailleur means associated with said sprockets, and a derailleur means associated with said pinions, a first control cable for said derailleur means associated with the sprockets, and a second control cable for said derailleur means associated with the pinions, said derailleur means moving between two extreme positions and comprising elastic return means for moving from one extreme position to the other, said device further comprising a single control having a rotary handle (18) and a portion (12) fixed with respect to a connection, in particular with a bicycle, and connected to said derailleur means so as to allow the selection of an appropriate gear from said reduced set,
**characterized in that**
said handle (18) is connected to a barrel (16) so as to be both fixed in translation therewith and configured to be displaced in rotation upon each manipulation of said handle, said barrel (16) comprising two tracks (30, 32) each of which receives one of two pins fixed to the ends of said first (44) and second (46) control cables, said tracks (30, 32) having profiles to ensure positioning with more or less sufficient tolerance to ensure movement and accurate return of said cables corresponding to the sprocket/pinion pairings of the selected successive gears, as well as indexing means for each of said gears, said two tracks (30, 32) extending over the circumference of said barrel (16) such that at least one of said two tracks makes more than one complete revolution around said circumference without abutting against each other, and such that the indexing points corresponding to the successive gears follow each other in a continuous progression along each track (30, 32) and allow, at least for one of said selected gears, a simultaneous displacement of the pins of said first and second control cables (44, 46).

6. Device according to claim 5, **characterized in that** said barrel (16) is of a bell-like cylindrical shape and said tracks (30, 32) are recessed internally and externally on said bell, and each pin is a roller (66, 68) rolling in the corresponding track which is fixed to a translation-guided slide fixed to the end of the corresponding control cable.

7. Device according to claim 5, **characterized in that** said barrel (16) comprises a disc with bosses and said pins are rollers situated on fingers provided to roll on said bosses, said fingers enabling the rotary movement to be converted into a substantially linear movement.

8. Device according to any one of claims 5 to 7, **characterized in that** it comprises compensation means (101, 102) for the forces of the elastic return means (96) and of said derailleur means associated with said sprockets and pinions.

9. Device according to claim 8, **characterized in that** said compensation means comprise for each control cable a preloaded spring (100, 102) coaxial with said control cable said spring being interposed between a fixed stop of said control handle and the corresponding pin.

10. Device according to claim 9, **characterized in that** said springs are helical springs having a great length, a small diameter and a reduced stiffness, so as to provide a sufficient compensation force in a minimum amount of space.

11. Device according to any one of claims 5 to 10, **characterized in that** it comprises double-directional ratchet means interposed between said rotary control handle and said barrel.

12. Device according to claim 11, **characterized in that** each ratchet means comprises a pin articulated with respect to a bell-shaped extension of said control handle, which is biased by a spring, said pin being provided to cooperate with notches formed in said barrel.

13. Device according to any one of claims 5 to 12, **characterized in that** said fixed portion (12) of said control handle (18) comprises means (38) to allow the removal of a first barrel (16) and the attachment of a second barrel (16) having different tracks (30', 32').

14. Device according to any one of claims 5 to 13, **characterized in that** said track (30, 32) is a segmented track with means for adjusting the protrusion of each segment so as to realize a track with a predetermined profile.

## Patentansprüche

1. Verfahren zum Einrichten eines Übersetzungssatzes bei der üblichen Realisation eines variablen Kettenantriebes, insbesondere eines variablen Kettenantriebes für ein Fahrrad, wobei der Antrieb mit einer Einzelsteuerung ausgestattet ist, die es, während sich der variable Kettenantrieb im Betriebsmodus befindet, ermöglicht, aus dem Übersetzungssatz eine geeignete Übersetzung auszuwählen, wobei der Antrieb einen Satz von n antreibenden Zahnkränzen, die durch ein erstes Steuerkabel (44) gesteuert werden, und einen Satz von m angetriebenen Ritzeln, die durch ein zweites Steuerkabel (46) gesteuert werden, aufweist, wobei die Zahnkränze und Ritzel durch eine Kette verbunden sind, was zu insgesamt n × m potenziellen Übersetzungen führt, wobei nach diesem Verfahren aus der Gesamtheit dieser n × m potenziellen Übersetzungen ein reduzierter Satz ansteigender oder absteigender Übersetzungen beibehalten wird, die aus dem Satz der nutzbaren Übersetzungen ausgewählt sind, von dem alle Übersetzungen, die im Wesentlichen denselben Wert haben wie eine der beibehaltenen Übersetzungen und/oder alle Übersetzungen, die zu einer übertriebenen Fehlausrichtung der Kette führen, bereits unterdrückt wurden, und dann gemäß diesem reduzierten Satz von ausgewählten Übersetzungen ein mechanisches Programm erstellt wird, das dazu ausgelegt ist, in die Einzelsteuerung eingebaut werden zu können, um sicherzustellen, dass jede Übersetzungswahl aus den ausgewählten Übersetzungen stattfindet,
**dadurch gekennzeichnet, dass**
der Schritt des Erstellens des mechanischen Programms das Bereitstellen eines Zylinders (16) zum Verbinden mit einem drehbaren Handgriff (18) der Einzelsteuerung und das Ausführen von zwei Bahnen (30, 32) auf dem Zylinder (16) zum Betätigen des ersten und des zweiten Steuerkabels (44, 46) zum Wählen irgendeiner Übersetzung aus den ausgewählten Übersetzungen aufweist,
jede der zuvor aus dem Satz der nutzbaren Übersetzungen beibehaltenen Übersetzungen frei ausgewählt wird, ohne dass irgendein Zwang in der Auswahl durch die Ausführungseinrichtungen der Einzelsteuerung auferlegt wird, auch nicht durch die Auswahl der anderen gleichzeitig beibehaltenen Übersetzungen,
wobei die Anzahl an Übersetzungen, die die Einzelsteuerung gemäß irgendeines mechanischen Programms wählen kann, in keiner Weise dadurch eingeschränkt ist, wie die Steuerung, sei es von der Auslegung oder Realisierung her, erfolgt ist, außer durch die Fähigkeit der Einrichtungen, die das mechanische Programm tragen, wobei diese Fähigkeit frei ausgewählt wurde und ohne dass irgendein Zwang aufgrund der Ausführungsform der Einzelsteuerung auferlegt wurde.

2. Verfahren nach Anspruch 1, **dadurch gekennzeichnet, dass** Übersetzungen ausgewählt werden, die zwischen der kleinsten Übersetzung und der größten Übersetzung gleichmäßig verteilt sind.

3. Verfahren nach Anspruch 1, **dadurch gekennzeichnet, dass** Übersetzungen ausgewählt werden, die in Abhängigkeit von Gefällen, vom Benutzer, vom Gelände, gruppiert sind.

4. Verfahren nach einem der vorhergehenden Ansprüche, **dadurch gekennzeichnet, dass** in einer Tabelle mit zwei Eingabefelder, die die Ritzel in Zeilen und die Zahnkränze in Spalten oder umgekehrt aufweist, eine Abfolge an Paarungen für den Übergang von einer Übersetzung zur nächsten oder vorhergehenden durch einen Übergang von einem Feld der Tabelle zu dem in der Zeile benachbarten, dem in der Spalte benachbarten oder auch diagonal benachbarten Feld ausgewählt wird.

5. Übersetzungsauswahlvorrichtung, geeignet für einen variablen Kettenantrieb, wie er aus dem Verfahren nach einem der Ansprüche 1 bis 4 hervorgeht, insbesondere für ein Fahrrad, wobei diese Vorrichtung einen Satz von n antreibenden Zahnkränzen und einen Satz von m angetriebenen Ritzeln, die durch eine Kette verbunden sind, Kettenschaltungseinrichtungen, die den Zahnkränzen zugeordnet sind, und Kettenschaltungseinrichtungen, die den Ritzeln zugeordnet sind, ein erstes Steuerkabel für die den Zahnkränzen zugeordneten Kettenschaltungseinrichtungen und ein zweites Steuerkabel für die den Ritzeln zugeordneten Kettenschaltungseinrichtungen aufweist, wobei sich die Kettenschaltungseinrichtungen zwischen zwei extremen Positionen hin und her bewegen und Einrichtungen zur elastischen Rückstellung von einer der extremen Positionen zur anderen aufweisen, wobei die Vorrichtung auch eine Einzelsteuerung mit einem drehbaren Handgriff (18) und einem bezüglich einer Verbindung, insbesondere mit einem Fahrrad, feststehenden Teil (12) aufweist, und mit den Kettenschaltungseinrichtungen verbunden ist, um die Wahl einer geeigneten Übersetzung aus dem reduzierten Satz zu ermöglichen,
**dadurch gekennzeichnet, dass**
der Handgriff (18) mit einem Zylinder (16) verbunden ist, um sowohl mit diesem translationsfest als auch so eingerichtet zu sein, dass er infolge jeder Betätigung des Handgriffs drehend verschoben wird, wobei der Zylinder (16) zwei Bahnen (30, 32) aufweist, wovon jede einen von zwei an den Enden des ersten (44) bzw. zweiten (46) Steuerkabels befestigten Stiften aufnimmt, wobei die Bahnen (30, 32) Profile, um eine Positionierung mit einer mehr oder weniger ausreichenden Toleranz sicherzustellen, um die Bewegung der Kabel zu gewährleisten und die genaue Rückkehr der Kabel entsprechend der Paare Zahnkranz/Ritzel der aufeinander folgend ausgewählten Übersetzungen sicherzustellen, sowie Indexierungseinrichtungen für jede der Übersetzungen aufweisen, wobei sich die beiden Bahnen (30, 32) über den Umfang des Zylinders (16) derart erstrecken, dass mindestens eine dieser beiden Bahnen mehr als eine vollständige Drehung um den Umfang durchführt, ohne aneinander zu stoßen, und derart, dass die den aufeinander folgenden Übersetzungen entsprechenden Indexierungspunkte in durchgehender Abfolge entlang jeder Bahn (30, 32) aufeinander folgen und mindestens für eine der ausgewählten Übersetzungen eine gleichzeitige Verschiebung der Stifte des ersten und zweiten Steuerkabels (44, 46) zulassen.

6. Vorrichtung nach Anspruch 5, **dadurch gekennzeichnet, dass** der Zylinder (16) glockenförmig zylindrisch und die Bahnen (30, 32) innen und außen an der Glocke eingelassen sind, und jeder Stift ein in der entsprechenden Bahn rollender Rollkörper (66, 68) ist, der fest mit einem translationsbeweglich geführten Schieber verbunden ist, der am Ende des entsprechenden Steuerkabels befestigt ist.

7. Vorrichtung nach Anspruch 5, **dadurch gekennzeichnet, dass** der Zylinder (16) eine Scheibe mit Erhebungen aufweist und die Stifte an Zapfen befindliche Rollkörper sind, die dazu vorgesehen sind, auf den Erhebungen zu rollen, wobei die Zapfen die Umsetzung der Drehbewegung in eine im Wesentlichen lineare Bewegung ermöglichen.

8. Vorrichtung nach einem der Ansprüche 5 bis 7, **dadurch gekennzeichnet, dass** sie Kompensationseinrichtungen (101, 102) für die Kräfte der elastischen Rückholeinrichtungen (96) und der den Zahnkränzen und Ritzeln zugeordneten Kettenschaltungseinrichtungen aufweist.

9. Vorrichtung nach Anspruch 8, **dadurch gekennzeichnet, dass** die Kompensationseinrichtungen für jedes Steuerkabel eine zu diesem Kabel koaxiale, vorgespannte Feder (100, 102) aufweisen, die zwischen einem feststehenden Anschlag des Betätigungsgriffes und dem entsprechenden Stift angeordnet ist.

10. Vorrichtung nach Anspruch 9, **dadurch gekennzeichnet, dass** die Federn Spiralfedern mit großer Länge, kleinem Durchmesser und geringer Steifigkeit sind, derart, dass sie eine ausreichende Kompensationskraft bei minimalem Platzaufwand bereitstellen.

11. Vorrichtung nach einem der Ansprüche 5 bis 10, **dadurch gekennzeichnet, dass** sie in zwei Richtungen wirkende Einrasteinrichtungen aufweist, die zwischen dem drehbaren Betätigungsgriff und dem Zylinder angeordnet sind.

12. Vorrichtung nach Anspruch 11, **dadurch gekennzeichnet, dass** jede Einrasteinrichtung einen bezüglich einer glockenförmigen Verlängerung des Betätigungsgriffes angelenkten Stift aufweist, der durch eine Feder vorgespannt ist, wobei der Stift dazu vorgesehen ist, mit im Zylinder ausgebildeten Kerben zusammenzuwirken.

13. Vorrichtung nach einem der Ansprüche 5 bis 12, **dadurch gekennzeichnet, dass** der feststehende Teil (12) des Betätigungsgriffes (18) Einrichtungen (38) aufweist, um das Entfernen eines ersten Zylinders (16) und das Anbringen eines zweiten Zylinders (16) mit anderen Bahnen (30', 32') zu ermöglichen.

14. Vorrichtung nach einem der Ansprüche 5 bis 13, **dadurch gekennzeichnet, dass** die Bahn (30, 32) eine in Segmente aufgeteilte Bahn mit Einstelleinrichtungen ist, um jedes Segment zum Vorspringen zu bringen, um eine Bahn mit einem vorgegebenen Profil herzustellen.
